Europäisches Patentamt

European Patent Office

Office européen des brevets

(11) Veröffentlichungsnummer: **0 282 853 B1**

(12)  # EUROPÄISCHE PATENTSCHRIFT

(45) Veröffentlichungstag der Patentschrift: **07.08.91**       (51) Int. Cl.⁵: **B32B 15/08**

(21) Anmeldenummer: **88103463.1**

(22) Anmeldetag: **05.03.88**

(54) Verbundprofile.

(30) Priorität: **18.03.87 DE 3708725**

(43) Veröffentlichungstag der Anmeldung:
**21.09.88 Patentblatt 88/38**

(45) Bekanntmachung des Hinweises auf die
Patenterteilung:
**07.08.91 Patentblatt 91/32**

(84) Benannte Vertragsstaaten:
**DE ES FR GB IT NL SE**

(56) Entgegenhaltungen:
**DE-A- 2 057 644**
**DE-A- 2 830 344**
**GB-A- 1 299 563**
**GB-A- 1 485 361**

**DERWENT JAPANESE PATENTS REPORT,**
**Derwent Publications, AN 86-216725/33, DC**
**A32L02M22; & JP-A-61 149 339**
**(BRIDGESTONE CORP.) 08-07-1986**

(73) Patentinhaber: **BAYER AG**

**W-5090 Leverkusen 1 Bayerwerk(DE)**

(72) Erfinder: **Zingelmann, Gerd, Dipl.-Ing.**
**Fürstenberg-Strasse 17**
**W-5090 Leverkusen 1(DE)**
Erfinder: **Geyken, Erwin, Dipl.-Ing.**
**Brunhildenstrasse 4**
**W-8014 Neubiberg(DE)**

## Beschreibung

Die Erfindung betrifft Profile und Walzen aus einem Metallkern und einer damit fest verbundenen Schicht aus thermoplastischem Polyolefin-Kautschuk (TPO).

Bisher ist es nicht möglich gewesen, solche Profile herzustellen, weil thermoplastische Polyolefin-Kautschuke nicht auf Metall haften. Auch Haftvermittler oder Kleber für diesen Zweck sind nicht bekannt.

Bekannt ist aus DE-A-2057644 lediglich eine Verbinung eines Metallkerns mit einem Belag aus einer Mischung auf Basis von Ethylen-Propylen-Terpolymer (EPDM), bei der zwischen Metallkern und EPDM-Deckschicht von innen nach außen ein Bindemittel und eine Zwischenplatte aus einem EPDM-Verschnittmischung vorgesehen sind und die Vulkanisation des beschichteten Gegenstandes in einem Autoklav mit Sattdampf erfolgen soll, insbesondere Bedeckungen von Mettallwalzen, welche dadurch gekennzeichnet ist, daß die Zwischenplatte aus einer Verschnittmischung von EPDM und Polychlorbutadien besteht.

Es wurde gefunden, daß man Profile und Walzen aus einem Metallkern und einer damit fest verbundenen Schicht aus thermoplastischem Polyolefin-Kautschuk erhält, wenn man ein Metallprofil zuerst mit einer Polypropylenschicht überzieht und auf dieser Schicht dann eine Schicht eines thermoplastischen Polyolefin-Kautschuks aufbringt.

Man erhält dann Profile mit einem Kern aus Metall und einer Deckschicht aus thermoplastischem PolyolefinKautschuk, die fest miteinander verbunden sind durch die dazwischenliegende Schicht aus Polypropylen. Die Polypropylenschicht schafft eine sehr feste Verbindung sowohl mit dem Metall als auch mit dem thermoplastichen Polyolefin-Kautschuk.

Als Metallkern können Profile beliebiger Form z.B. aus Eisen oder Aluminium oder auch anderen Metallen verwendet werden. Zur Ummantelung verwendet man handelsübliches ungefülltes oder gefülltes Polypropylen, das nach bekannten Verfahren wie z.B. durch Spritzguß- oder Extrusion aufgebracht wird. Ist das Profil allseitig von Polypropylen umgeben, dann wird dessen Haftung auf dem Metall noch dadurch erhöht, daß sich der Überzug beim Abkühlen von der Extrusions- oder Spritzgießtemperatur auf Raumtemperatur zusammenzieht und auf den Metallkern festschrumpft.

Auf dem Polypropylenüberzug haften Überzüge aus thermoplastischen Polyolefin-Kautschuken fest. Sie werden ebenfalls durch Extrusion oder Spritzguß aufgebracht, wobei Massetemperaturen von 190 bis 240° erforderlich sind. Bei diesen Temperaturen, die höher sind als die Kristallitschmelztemperatur von Polypropylen, wird der Polypropylenüberzug oberflächlich angeschmolzen und verschweißt auf diese Weise mit dem thermoplastischen Polyolefin-Kautschuk.

Geeignete Kautschuke sind z.B. Ethylenvinylacetat-Copolymere und EPDM-Kautschuke (Ethylenpropylendienmonomerkautschuke) und deren Gemische mit Polypropylen.

Besonders geeignet ist ein dynamisch vernetztes Gemisch aus einem EPDM-Kautschuk und Polypropylen.

Die Profile können beliebige Formen haben, z.B. können Rohre, Walzen, Schienen, T-Profile, U-Profile hergestellt werden. Die Dicke und Form des Metallkerns richtet sich nach der beabsichtigten Verwendung. Die Polypropylenschicht muß mindestens so dick sein, daß oberflächliches Anschmelzen keine Risse und Löcher verursacht, z.B. mindestens 0,5 mm. Die Dicke der Polypropylenschicht ist nach oben an sich nicht begrenzt. Aus praktischen Überlegungen sollte jedoch die Schicht nicht dicker als 10 mm sein.

Die Schicht des thermoplastischen Elastomeren ist ebenfalls im allgemeinen etwa 1 bis 10 mm stark. Sie kann gleichmäßig sein. Es ist aber auch möglich, Körper mit einer strukturierten Oberfläche herzustellen oder solche, die Ausstülpungen verschiedener Art enthalten.

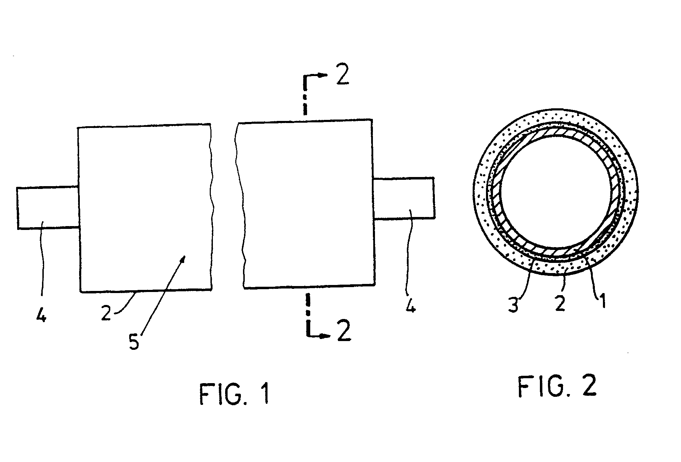

Ein Beispiel für einen Profilkörper zeigt die Fig. 1. und Fig. 2. Es handelt sich um eine Walze (5) mit Lagern (4) und einer thermoplastichen Polyolefin-Kautschuk-Außenschicht (2). Der Querschnitt dieser Walze läßt erkennen, daß sie hohl ist, aus einem Metallrohr (1) besteht, das einen Überzug aus Polypropylen (3) und einen 2. Überzug aus thermoplastischem Polyolefin-Kautschuk (2) trägt. Bevorzugt ist hier der thermoplastische Kautschuk, ein Ethylenpropylendienmonomer-Kautschuk im Gemisch mit Polypropylen, der dynamisch vernetzt ist. Solche Walzen können z.B. als Transportwalzen in Kopiergeräten etc. verwendet werden.

### Beispiel

Die Herstellung solcher Walzen kann im Extrusions- oder Spritzgieß-Verfahren erfolgen. Beim Extrudieren wird das Metallrohr mittels Abzugsband (Raupenabzug) durch einen Querspritzkopf gezogen. Während dieses Vorganges wird in einer 1. Stufe auf das Metallrohr die Polypropylenschicht aufextrudiert. Nach Abkühlung und Schrumpfen des Polypropylens wird das ummantelte Rohr nochmals durch den Querspritzkopf gegeben und in einer 2. Stufe mit dem thermoplastischen Polyolefin-Kautschuk ummantelt. Neben diesem 2 Stufenverfahren können solche Walzen auch im Koextrusionsverfahren gefertigt werden, d.h. in einer Stufe.

Beim Spritzgießverfahren wird auf das Metallrohr oder die Achse ebenfalls in der 1. Stufe das Polypropylen und in einer 2. Stufe der Walzenmantel aus thermoplastischen Polyolefin-Kautschuk gespritzt.

Die Haftung zwischen der Polypropylen- und der thermoplastischen Kautschuk-Schicht beträgt mindestens 20 N/25 mm.

## Patentansprüche

1. Profil aus einem Metallkern, einer Deckschicht und einer zwischen Metallkern und Deckschicht liegenden Schicht, dadurch gekennzeichnet, daß die Deckschicht aus einem thermoplastischen Polyolefin-Kautschuk und die Zwischenschicht aus Polypropylen besteht.

## Claims

1. Profile formed of a metal core, a covering layer and a layer between the metal core and the covering layer, characterised in that the covering layer consists of a thermoplastic polyolefine rubber and the intermediate layer consists of polypropylene.

## Revendications

1. Profilé composé d'une âme métallique, d'une couche protectrice et d'une couche intercalée entre l'âme métallique et la couche protectrice, caractérisé en ce que la couche protectrice est en caoutchouc polyoléfinique thermoplastique et la couche intercalaire en polypropylène.

FIG. 1

FIG. 2